# EUROPÄISCHE PATENTSCHRIFT

(11) **EP 4 284 633 B1**
(45) Veröffentlichungstag und Bekanntmachung des Hinweises auf die Patenterteilung: **10.12.2025**
(21) Anmeldenummer: 22701288.7
(22) Anmeldetag: 13.01.2022
(51) Int. Cl.: B29D 30/06

(54) **VORRICHTUNG ZUR NACHBEHANDLUNG VON VULKANISIERTEN REIFEN**
DEVICE FOR POST-TREATING VULCANIZED TYRES
DISPOSITIF POUR RÉALISER UN POST-TRAITEMENT DE PNEUMATIQUES VULCANISÉS

(30) Priorität: 01.02.2021 DE 102021102256
(43) Veröffentlichungstag der Anmeldung: 06.12.2023
(73) Patentinhaber: Harburg-Freudenberger Maschinenbau GmbH, 21079 Hamburg (DE)
(72) Erfinder: ERDMANN, Fokko, 21365 Adendorf (DE); BAHLKE, Stefan, 21337 Lüneburg (DE)
(74) Vertreter: Klickow & Wetzel PartGmbB
(86) Internationale Anmeldenummer: PCT/DE2022/100028
(87) Internationale Veröffentlichungsnummer: WO 2022/161578

(56) Entgegenhaltungen:
- EP-A1- 0 642 886
- EP-A1- 3 875 260
- EP-A2- 0 967 069
- CN-A- 106 273 588
- CN-A- 110 733 193
- DE-A1- 102015 016 882
- DE-A1- 2 358 964
- US-A- 3 107 563
- US-A- 5 192 382
- US-A1- 2016 009 038

## Beschreibung

Die Erfindung betrifft eine Vorrichtung zur Nachbehandlung von vulkanisierten Reifen.

Darüber hinaus betrifft die Erfindung eine Reifenheizpresse aufweisend zumindest eine Vorrichtung zur Nachbehandlung von vulkanisierten Reifen.

Es sind bereits Vorrichtungen zur Nachbehandlung von vulkanisierten Reifen, auch Post Cure Inflator (PCI) genannt, bekannt, die die mithilfe von Reifenheizpressen zumindest teilweise vulkanisierten Reifen von innen mit einem Druck beaufschlagen und mehr oder weniger kontrolliert thermisch behandeln, wobei die Reifen durch Wärmezufuhr fertig vulkanisierbar oder durch Wärmeentzug abkühlbar sind.

Mithilfe derartiger Nachbehandlungsvorrichtungen, die sowohl als Stand-Alone-Maschinen als auch als Einheit mit einer Reifenheizpresse verfügbar sind, wird es insbesondere ermöglicht, einen noch heißen vulkanisierten Reifen, der aufgrund seiner Temperatur noch leicht durch äußere Krafteinwirkungen plastisch verformbar ist, in einer Art und Weise abzukühlen, dass sehr hohe Genauigkeiten bezüglich der Abmessungen des Reifens und des Rundlaufs des Reifens erreichbar sind.

Vorteilhaft sind insbesondere Nachbehandlungsvorrichtungen mit mehreren Stationen, sodass mehrere Reifen gleichzeitig nachbehandelbar sind. Beispielsweise ist die Anordnung von zwei Stationen übereinander in einem Modul bekannt. Als besonders vorteilhaft haben sich in der Kombination mit Doppelreifenheizpressen Nachbehandlungsvorrichtungen mit vier Stationen erwiesen, wobei jeweils zwei Stationen in einem Modul übereinander angeordnet sind. Eine solche Nachbehandlungsvorrichtung ist beispielsweise in der DE 10 2015 016 882 A1 offenbart.

Derartige Nachbehandlungsvorrichtungen weisen häufig einen hohen Automatisierungsgrad auf, wobei alle Stationen der Nachbehandlungsvorrichtung autark steuerbar sind.

Zur Nachbehandlung der zumindest teilweise vulkanisierten Reifen weist eine Nachbehandlungsvorrichtung gemäß dem Stand der Technik an jeder Station zwei Felgenteller auf. Zwischen diesen Felgentellern ist der Reifen im Bereich der Kerne derart einklemmbar, dass der Innenraum des Reifens abgedichtet ist. Der Innenraum des Reifens ist nach der Abdichtung durch das Einleiten eines Stützgases mit einem Druck beaufschlagbar, wobei die Fixierung des Reifens in der Sollgröße in Bezug auf die Breite des Reifens (etwa der Abstand von Kern zu Kern) durch eine mithilfe zumindest eines Hydraulikzylinders auf zumindest einen Felgenteller übertragbaren Schließkraft erfolgt (Zuhaltung).

Der mithilfe einer derartigen Nachbehandlungsvorrichtung im Innenraum eines oder mehrerer Reifen erzeugbare Druck liegt für Anwendungen bei der Herstellung von PKW-Reifen in einem Bereich bis etwa 4 bar, für dickwandiger BIAS-Reifen (z.B. Motorroller, Landmaschinen, Baumaschinen etc.) sind etwa 6 bar bis 7 bar üblich.

Die maximale Schließkraft einer derartigen Nachbehandlungsvorrichtung beträgt etwa 170 kN.

Die einzelnen Stationen weisen jeweils einen umlaufenden Rahmen auf, der insbesondere aufgrund der hydraulischen Zuhaltung und der hohen Drücke bei der Nachbehandlung stabil und dadurch material- und kostenintensiv ausgeführt sein muss. Auch das unter den Stationen angeordnete Untergestell, mit dem die auftretenden Kräfte in den Boden abführbar sind, ist notwendig und komplex.

Zur Gewährleistung der notwendigen Stabilität weist der Rahmen der Nachbehandlungsvorrichtung je Modul (ein Modul aufweisend mindestens eine Station, ggf. mehrere übereinander angeordnete Stationen je Modul) mindestens zwei Tragsäulen auf, die im Falle von zwei Tragsäulen auf gegenüberliegenden Seiten des Moduls angeordnet sind. Die Tragsäulen sind oberhalb und unterhalb jeder Station mithilfe einer Traverse miteinander verbunden.

Der so gebildete Rahmen ist sehr stabil und massiv, weist jedoch ein hohes Gewicht und eine große Höhe auf.

Das Gewicht bekannter Nachbehandlungsvorrichtung mit vier Stationen in zwei Modulen beträgt dabei etwa 3500 kg und die Höhe der Nachbehandlungsvorrichtung mit Untergestell liegt in einer Größenordnung von etwa 4,6 m.

Aus der CN 110733193 A ist bereits eine Vorrichtung zur Nachbehandlung von vulkanisierten Reifen bekannt, bei der eine Station zur Nachbehandlung der Reifen eine Stützgaszufuhreinrichtung aufweist. Darüber hinaus ist ein in der Vorrichtung positionierter Reifen von innen mit einem Druck beaufschlagbar.

Eine weitere Vorrichtung zur Nachbehandlung von vulkanisierten Reifen wird in der CN 106273588 A beschrieben. Weitere Komponenten von Vorrichtungen zur Nachbehandlung von vulkanisierten Reifen werden in der US 2016/009038 A1 offenbart.

Eine Aufgabe der Erfindung ist es, eine Nachbehandlungsvorrichtung für zumindest teilweise vulkanisierte Reifen anzugeben, die eine gegenüber dem Stand der Technik im Hinblick auf den Rahmen verbesserte Konstruktion aufweist.

Diese Aufgabe wird durch eine Nachbehandlungsvorrichtung für zumindest teilweise vulkanisierte Reifen gemäß Patentanspruch 1 gelöst.

Eine weitere Aufgabe der Erfindung ist es, eine Nachbehandlungsvorrichtung für zumindest teilweise vulkanisierte Reifen mit einer verringerten Größe anzugeben.

Diese Aufgabe wird erfindungsgemäß durch eine Nachbehandlungsvorrichtung für zumindest teilweise vulkanisierte Reifen gemäß abhängigen Anspruch 3 gelöst.

Eine weitere Aufgabe der Erfindung ist es, eine Reifenheizpresse zu schaffen, die die vorstehend genannten Probleme löst.

Diese Aufgabe wird durch eine Reifenheizpresse gemäß abhängigen Patentanspruch 8 gelöst.

Weiterhin weist eine erfindungsgemäße Nachbehandlungsvorrichtung eine pneumatische Versorgungseinrichtung zur Einleitung und zum Ablassen von Stützgas in bzw. aus einem zu behandelnden Reifen auf, sodass ein zu behandelnder Reifen von innen mit einem Druck beaufschlagbar ist.

Der Rahmen einer erfindungsgemäßen Nachbehandlungsvorrichtung weist genau eine vertikal ausgerichtete Tragsäule auf, an der die obere und die untere Traverse jeder Station befestigt sind.

In einer bevorzugten Ausführungsform der Erfindung weist die Nachbehandlungsvorrichtung zwei Stationen zur Nachbehandlung eines zumindest teilweise vulkanisierten Reifens auf.

In einer besonders bevorzugten Ausführungsform der Erfindung weist die Nachbehandlungsvorrichtung vier Stationen zur Nachbehandlung eines zumindest teilweise vulkanisierten Reifens auf, wobei jeweils zwei Stationen übereinander angeordnet sind.

In einer Ausführungsform der Erfindung weist diese mindestens zwei Stationen auf, wobei mindestens zwei der Stationen der Nachbehandlungsvorrichtung in einer Draufsicht auf gegenüberliegenden Seiten der Tragsäule angeordnet sind.

In einer anderen Ausführungsform der Erfindung sind mindestens zwei der Stationen in einer Draufsicht in einem Winkel kleiner als 180° zueinander angeordnet, sodass die Breite der Nachbehandlungsvorrichtung im Vergleich zu gegenüberliegend angeordneten Stationen verringert ist.

In einer Ausführungsform der Erfindung sind mindestens zwei der Stationen in einer Draufsicht etwa in einem rechten Winkel (90°) zueinander angeordnet.

Die Verringerung der Breite der Nachbehandlungsvorrichtung kann erfindungsgemäß auch durch eine Anordnung der Stationen in einem Winkelbereich zueinander von etwas unter 90° bis etwas unter 180° in einer Draufsicht erreicht werden, wobei der minimale Winkel von dem Durchmesser der einzelnen Stationen und von der verwendeten Be- und Entladevorrichtung abhängt.

In einer Ausführungsform der Erfindung weist jede Station der Nachbehandlungsvorrichtung zwei Felgenteller auf, zwischen denen ein Reifen zur Nachbehandlung fixierbar ist. Zur Fixierung des Reifens ist mindestens einer der Felgenteller verfahrbar, sodass der Abstand vom jeweils anderen Felgenteller änderbar ist.

In einer bevorzugten Ausführungsform der Erfindung ist je Station genau ein Felgenteller verfahrbar und der jeweils andere Felgenteller fest und unbeweglich an der zugeordneten Traverse angeordnet.

In einer bevorzugten Ausführungsform der Erfindung weist diese je Station mindestens einen pneumatischen Antrieb auf, mit dem die verfahrbaren Felgenteller der Nachbehandlungsvorrichtung pneumatisch antreibbar sind. Zur Zuhaltung der einzelnen Behandlungsstationen weist die erfindungsgemäße Nachbehandlungsvorrichtung jeweils eine zugeordnete mechanische Zuhalteeinrichtung auf.

Durch die Kombination eines pneumatischen Antriebs der Felgenteller mit einer mechanischen Zuhalteeinrichtung kann erfindungsgemäß auf die Verwendung von Hydraulikzylindern verzichtet werden. Dadurch ist kein Kraftfluss durch einen um jede Station außen umlaufenden Rahmen mehr notwendig.

In einer Ausführungsform der Erfindung ist die mechanische Zuhalteeinrichtung als eine Hammerkopfverriegelung oder als eine Pilzkopfverriegelung ausgebildet.

In einer Ausführungsform der Erfindung weist die Nachbehandlungsvorrichtung je Station eine Abdrückvorrichtung auf, mit der der Reifen der jeweiligen Station nach der Nachbehandlung des Reifens vom jeweiligen Felgenteller abdrückbar ist. Dadurch ist ein Festkleben der Reifen an den Felgentellern reduziert und die Reifenentnahme aus der Nachbehandlungsvorrichtung wird unterstützt.

Gemäß der Erfindung weist die Nachbehandlungsstation mindestens zwei Stationen auf, wobei die Stationen zumindest paarweise eine konsequent gemeinsame Fahrweise realisieren.

Eine paarweise Zuordnung der Stationen zu einer konsequent gemeinsamen Fahrweise ermöglicht eine optimale Anpassung der Nachbehandlungsvorrichtung an die Verwendung mit einer Doppelreifenheizpresse, sodass die aus den Vulkanisationskammern der Heizpresse in einem Produktionstakt entnommenen Reifen gleichzeitig nachbehandelbar sind.

Die Umsetzung der konsequent gemeinsamen Fahrweise erfolgt dabei durch die gemeinsame Verwendung der Steuereinrichtungen der Pneumatik durch die jeweils zugeordneten Stationen, sodass alle zugeordneten Stationen identisch angesteuert werden.

Insbesondere sind in einer Ausführungsform der Erfindung die pneumatischen Leitungen zur Einleitung von Stützgas in die Reifen in den jeweiligen Stationen und zum Entlüften der Reifen in den jeweiligen Stationen miteinander verbunden, sodass über ein zentral gesteuertes Ventil die Zuleitung des Stützgases in alle zugeordneten Stationen gleichzeitig erfolgt.

In einer Ausführungsform der Erfindung sind die pneumatischen Antriebe der verfahrbaren Felgenteller der zugeordneten Stationen miteinander verbunden, sodass ein etwa synchrones Verfahren der Felgenteller der zugeordneten Stationen erfolgt.

In einer Ausführungsform der Erfindung sind die pneumatischen Leitungen der Abdrückvorrichtungen der zugeordneten Stationen miteinander verbunden, sodass diese über ein zentral gesteuertes Ventil gleichzeitig betätigbar sind.

In einer Ausführungsform der Erfindung mit vier Stationen sind diese einander paarweise zur konsequent gemeinsamen Fahrweise zugeordnet, wobei jeweils die beiden oberen Stationen und die beiden unteren Stationen einander zugeordnet sind.

In einer Ausführungsform der Erfindung sind die pneumatischen Einrichtungen aller Stationen der Nachbehandlungsvorrichtung derart ausgebildet, dass diese für alle Stationen gleichartig betätigt werden.

In einer bevorzugten Ausführungsform der Erfindung weist die Nachbehandlungsvorrichtung für jede Nachbehandlungsstation eine Weitenverstellungseinrichtung auf, mit der der Abstand der Felgenteller im geschlossenen Zustand der Nachbehandlungsstation einstellbar ist. Dadurch können mit einer Nachbehandlungsvorrichtung Reifen verschiedener Breite behandelt werden.

Besonders bevorzugt weist die Weitenverstellungseinrichtung feste mechanisch einstellbare Anschläge auf, sodass ein Verfahren des jeweiligen verfahrbaren Felgentellers an jeweils einen ersten mechanischen Anschlag für den geöffneten Zustand der Nachbehandlungsstation und einen zweiten mechanischen Anschlag für den geschlossenen Zustand der Nachbehandlungsstation ermöglicht ist.

Vorteilhaft sind im Bereich der mechanischen Anschläge zur Überwachung der Endlagen Initiatoren oder Schalter installiert, sodass der Antrieb des verfahrbaren Felgentellers entsprechend ansteuerbar ist.

Die Verwendung fester mechanisch einstellbarer Anschläge für die Weitenverstellungseinrichtung ermöglicht es, auf ein Wegemesssytem zu verzichten, das teure Messtechnik erfordert.

In einer vorteilhaften Ausführungsform der Erfindung weist diese je Nachbehandlungsstation eine Abdrückeinrichtung auf, mit der ein nachbehandelter Reifen vom oberen (verfahrbaren) Felgenteller abdrückbar ist. Ein nachbehandelter Reifen könnte sonst, sofern dieser am verfahrbaren Felgenteller festklebt, mit diesem nach oben gefahren werden und dabei oder durch ein Herunterfallen beschädigt werden.

Eine erfindungsgemäße Nachbehandlungsvorrichtung für zumindest teilweise vulkanisierte Reifen bringt weiterhin die folgenden Vorteile mit sich:
- Es ist eine ortsfeste Aufstellung der Komponenten möglich
- Die Nachbehandlungsvorrichtung kann direkt mit dem Entlader einer zugeordneten Heizpresse beladen und entleert werden
- Alternativ kann dies aber auch mit einer separaten der Nachbehandlungsvorrichtung zugeordneten Be- und Entladevorrichtung erfolgen
- Die Konstruktion ist platzsparend am Aufstellungsort
- Der Aufbau aus kleinen modularen und leicht zu bearbeitenden Einheiten ermöglicht die Fertigung in kleinen und einfachen Maschinen

Eine erfindungsgemäße Reifenheizpresse weist zumindest eine erfindungsgemäße Nachbehandlungsvorrichtung auf.

Bevorzugt ist die Nachbehandlungsvorrichtung dabei so angeordnet, dass der Entlader der Reifenheizpresse als Be- und Entlader der Nachbehandlungsvorrichtung nutzbar ist.

In den nachfolgend beschriebenen Figuren sind Details beispielhafter Ausführungsformen der Erfindung schematisch dargestellt. Es zeigen:
- Figur 1:: Eine perspektivische Ansicht einer erfindungsgemäßen Nachbehandlungsvorrichtung mit vier Stationen,
- Figur 2a:: Eine Station einer erfindungsgemäßen Nachbehandlungsvorrichtung in einem geöffneten Zustand,
- Figur 2b:: Eine Station einer erfindungsgemäßen Nachbehandlungsvorrichtung in einem geschlossenen Zustand und
- Figur 3:: Eine schematische Darstellung des pneumatischen Systems einer Ausführungsform einer erfindungsgemäßen Nachbehandlungsvorrichtung.

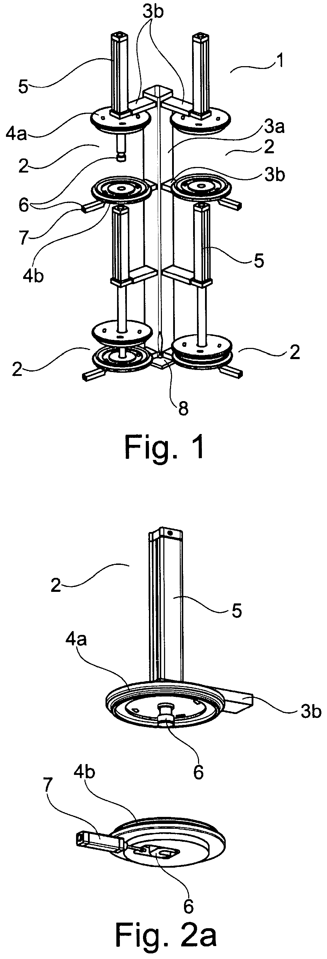

In Figur 1 ist eine perspektivische Ansicht einer erfindungsgemäßen Nachbehandlungsvorrichtung (1) mit vier Stationen (2) dargestellt. Die Nachbehandlungsvorrichtung (1) weist einen Rahmen auf, der aus einer einzigen zentralen Tragsäule (3a) und im Bereich der Stationen (2) an der Tragsäule (3a) angebrachten Traversen (3b) besteht. Jede Station (2) ist im Bereich von zwei Traversen (3b) angeordnet, die jeweils in einem Abstand übereinander mit der Tragsäule (3a) verbunden sind. Die übereinander angeordneten Stationen (2) teilen sich jeweils eine Traverse (3b), sodass die Nachbehandlungsvorrichtung (1) insgesamt sechs Traversen (3b) aufweist.

Jede Station (2) weist einen verfahrbaren Felgenteller (4a) und einen feststehenden Felgenteller (4b) auf, wobei der verfahrbare Felgenteller (4a) mithilfe eines pneumatischen Antriebs (5) in Richtung des feststehenden Felgentellers (4b) oder von diesem weg beweglich ist. Der verfahrbare Felgenteller (4a) ist dabei stets der obere Felgenteller (4a), da ein nachbehandelter Reifen bei einem Öffnen der Nachbehandlungsstation (2) so auf dem unteren Felgenteller (4b) liegen bleiben kann. Die Bewegungsachse ist in der dargestellten Ausführungsform dabei vertikal und etwa parallel zur Tragsäule (3a) ausgerichtet.

Die Stationen (2) sind mit jeweils einer mechanischen Zuhaltung (6) ausgerüstet, die als Hammerkopfverriegelungen ausgebildet sind. Dazu weist der verfahrbare Felgenteller (4a) einen mittig aus diesem in Richtung des feststehenden Felgentellers (4b) der Station (2) ragenden Stift aus, dessen Kopfbereich als ein Hammerkopf ausgebildet ist. Der feststehende Felgenteller (4b) weist in seiner Mitte eine Durchgangsöffnung auf, durch die der Stift des verfahrbaren Felgentellers (4a) hindurchtritt, wenn dieser mithilfe des pneumatischen Antriebs (5) in Richtung des feststehenden Felgentellers (4b) verfahren wird. Unterhalb des feststehenden Felgentellers (4b) der Station (2) ist ein Riegelelement angeordnet, dass den Hammerkopf des Stiftes in einem verriegelten Zustand der Station (2) zu einer formschlüssigen Verbindung umfasst. Dazu ist das Riegelelement mithilfe eines Verriegelungsantriebs (7) beweglich.

An ihrer Unterseite weist die Tragsäule (3a) eine Montageplatte (8) auf, mit der die Nachbehandlungsvorrichtung (1) direkt am Boden des Produktionsortes befestigbar ist.

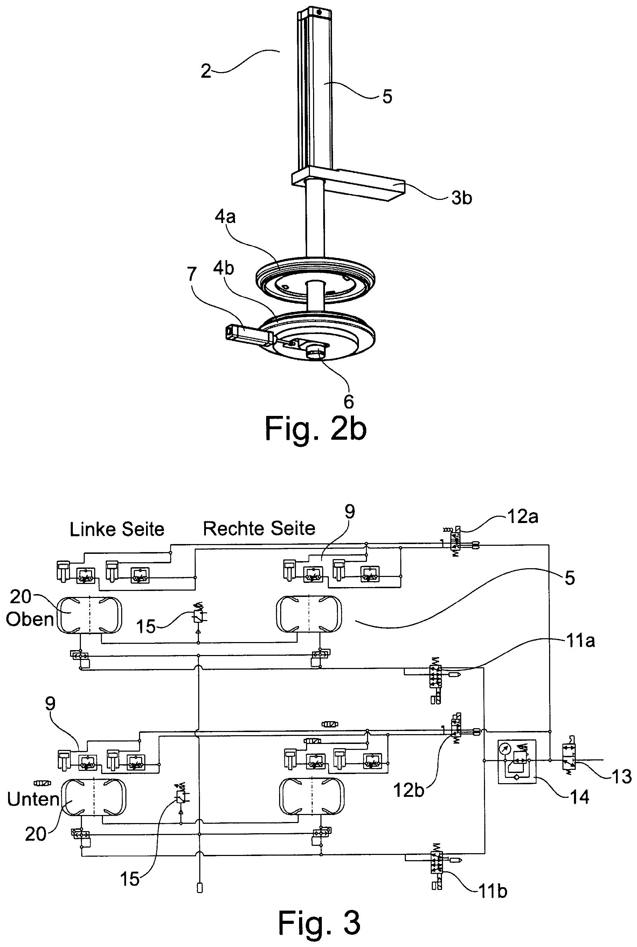

Die Figuren 2a und 2b zeigen eine Station (2) einer erfindungsgemäßen Ausführungsform einer Nachbehandlungsvorrichtung (1) in einem geöffneten Zustand (Figur 2a) und in einem geschlossenen Zustand (Figur 2b). Insbesondere ist der an der Unterseite des feststehenden Felgentellers (4b) angeordnete Riegelelement der mechanischen Zuhaltung (6) zu erkennen, der mithilfe des Verriegelungsantriebs (7) entlang einer Achse vor und zurück bewegbar ist.

In Figur 3 ist eine schematische Darstellung zumindest eines Teils des pneumatischen Systems einer Ausführungsform einer erfindungsgemäßen Nachbehandlungsvorrichtung (1) dargestellt, wobei die Nachbehandlungsvorrichtung (1) vier Stationen (2) aufweist, in denen jeweils ein nachzubehandelnder Reifen (20) angeordnet ist.

Die Nachbehandlungsvorrichtung (1) weist für jede Station (2) eine Zuführeinrichtung für ein Stützgas auf, mit der der in der jeweiligen Station (2) befindliche Reifen (20) von innen mit einem Druck beaufschlagbar ist. Die Zuführeinrichtungen der Stationen sind dabei pneumatisch so miteinander verschaltet, dass die beiden oberen Stationen (2) über ein gemeinsames oberes Zuführventil (11a) und die beiden unteren Stationen (2) über ein gemeinsames unteres Zuführventil (11b) mit Stützgas versorgbar sind.

Die Nachbehandlungsvorrichtung (1) weist für jede Station (2) weiterhin eine Abdrückeinrichtung (9) auf, mit der ein nachbehandelter Reifen (20) vom verfahrbaren Felgenteller (4a) abdrückbar ist. Dabei sind die Abdrückeinrichtungen (9) pneumatisch so miteinander verschaltet, dass die Abdrückeinrichtungen (9) der oberen Stationen (2) über ein gemeinsames oberes Abdrückventil (12a) und die Abdrückeinrichtungen (9) der unteren Stationen über ein gemeinsames unteres Abdrückventil (12b) steuerbar sind.

Dadurch ist eine konsequent gemeinsame Fahrweise jeweils der oberen und der unteren Stationen (2) der Nachbehandlungsvorrichtung (1) realisiert.

Die Nachbehandlungsvorrichtung (1) weist weiterhin ein Hauptventil (13) für das pneumatische System, bestehend zumindest aus der Versorgung der Abdrückeinrichtungen (9) und der Zuführeinrichtungen für Stützgas, auf, mit dem die pneumatische Versorgung zentral steuerbar bzw. schaltbar ist.

Im Bereich der Zuführeinrichtungen weist die Nachbehandlungsvorrichtung (1) ein Druckregelventil (14) auf, mit dem der Druck des den Stationen (2) zugeführten Stützgases regelbar ist. Die oberen und die unteren Stationen (2) weisen jeweils eine gemeinsame Druckmesseinrichtung (15) auf, sodass der in den jeweiligen Reifen (20) einbringbare Druck mithilfe der Nachbehandlungsvorrichtung (1) regelbar ist.

## Patentansprüche

1. Nachbehandlungsvorrichtung (1) für zumindest teilweise vulkanisierte Reifen (20), aufweisend mindestens zwei Stationen (2) zur Nachbehandlung von Reifen (20) und mindestens eine Stützgaszuführeinrichtung, mit der ein in der Station (2) der Nachbehandlungsvorrichtung (1) befindlicher Reifen (20) von innen mit einem Druck beaufschlagbar ist, wobei die Nachbehandlungsvorrichtung (1) genau eine Tragsäule (3a) aufweist, **dadurch gekennzeichnet, dass** die Stationen (2) zum Antrieb des mindestens einen verfahrbaren Felgentellers (4a) jeweils einen pneumatischen Antrieb (5) aufweisen, wobei die Zuhaltung der Stationen (2) durch eine mechanische Verriegelung (6) realisiert ist und dass eine konsequent gemeinsame Fahrweise von zumindest zwei Stationen (2) durch eine entsprechende pneumatische Verschaltung der Stationen (2) realisiert ist.

2. Nachbehandlungsvorrichtung (1) nach Anspruch 1, **dadurch gekennzeichnet, dass** die mechanische Verriegelung (6) als eine Hammerkopfverriegelung ausgebildet ist.

3. Nachbehandlungsvorrichtung (1) nach einem der vorstehenden Ansprüche, **dadurch gekennzeichnet, dass** die Tragsäule (3a) ohne die Verwendung eines Untergestells direkt auf dem Boden eines Produktionsortes montierbar ist.

4. Nachbehandlungsvorrichtung (1) nach einem der vorstehenden Ansprüche, **dadurch gekennzeichnet, dass** die Anordnung der etwa auf einer gleichen Höhe mit der Tragsäule (3a) verbundenen Stationen (2) in einem Winkel kleiner als 180° zueinander an der Tragsäule (3a) erfolgt.

5. Nachbehandlungsvorrichtung (1) nach einem der vorstehenden Ansprüche, **dadurch gekennzeichnet, dass** mindestens zwei Stationen (2) übereinander an der Tragsäule (3a) angeordnet sind.

6. Nachbehandlungsvorrichtung (1) nach einem der vorstehenden Ansprüche, **dadurch gekennzeichnet, dass** diese vier Stationen (2) aufweist, wobei jeweils zwei Stationen (2) übereinander angeordnet sind.

7. Nachbehandlungsvorrichtung (1) nach einem der vorstehenden Ansprüche, **dadurch gekennzeichnet, dass** die Stationen (2) paarweise zu jeweils einer konsequent gemeinsamen Fahrweise zugeordnet sind.

8. Reifenheizpresse aufweisend zumindest eine Nachbehandlungsvorrichtung (1) nach mindestens einem der vorstehenden Ansprüche.

## Claims

1. Post-treatment device (1) for at least partially vulcanized tires (20), comprising at least two stations (2) for post-treating tires (20) and at least one support gas supply device, with which a tire (20) located in the station (2) of the post-treatment device (1) can be pressurized from the inside, wherein the post-treatment device (1) has exactly one support column (3a), **characterized in that** the stations (2) each have a pneumatic drive (5) for driving the at least one movable rim plate (4a), wherein the interlocking of the stations (2) is achieved by a mechanical lock (6) and that a consistently common mode of operation of at least two stations (2) is achieved by a corresponding pneumatic interconnection of the stations (2).

2. Post-treatment device (1) according to claim 1, **characterized in that** the mechanical lock (6) is designed as a hammer head lock.

3. Post-treatment device (1) according to one of the preceding claims, **characterized in that** the support column (3a) can be mounted directly on the floor of a production site without the use of a base frame.

4. Post-treatment device (1) according to one of the preceding claims, **characterized in that** the stations (2) connected approximately at the same height as the support column (3a) are arranged at an angle of less than 180° to each other on the support column (3a).

5. Post-treatment device (1) according to one of the preceding claims, **characterized in that** at least two stations (2) are arranged one above the other on the support column (3a).

6. Post-treatment device (1) according to one of the preceding claims, **characterized in that** it has four stations (2), with two stations (2) each arranged one above the other.

7. Post-treatment device (1) according to one of the preceding claims, **characterized in that** the stations (2) are assigned in pairs to a consistently common mode of operation.

8. Tire heating press comprising at least one post-treatment device (1) according to at least one of the preceding claims.

## Revendications

1. Dispositif de post-traitement (1) de pneus (20) au moins en partie vulcanisés, comportant au moins deux stations (2) de post-traitement de pneus (20) et au moins un système d'amenée de gaz auxiliaire , avec lequel un pneu (20) se trouvant dans la station (2) du dispositif de post-traitement (1) peut être soumis à l'action d'une pression depuis l'intérieur, le dispositif de post-traitement (1) comportant précisément une colonne de support (3a), **caractérisé en ce que** les stations (2) comportent, pour entraîner l'au moins un disque de jante (4a) pouvant être déplacé, chacune un entraînement pneumatique (5), le maintien des stations (2) étant réalisé par un verrouillage (6) mécanique, et **en ce qu'**une conduite en conséquence commune d'au moins deux stations (2) est réalisée par un raccordement pneumatique correspondant des stations (2).

2. Dispositif de post-traitement (1) selon la revendication 1, **caractérisé en ce que** le verrouillage (6) mécanique est formé comme un verrouillage à tête de marteau.

3. Dispositif de post-traitement (1) selon l'une des revendications précédentes, **caractérisé en ce que** la colonne de support (3a) peut être montée directement sur un sol d'un emplacement de production sans utiliser un sous-châssis.

4. Dispositif de post-traitement (1) selon l'une des revendications précédentes, **caractérisé en ce que** l'agencement des stations (2) reliées à la colonne de support (3a) à peu près à une même hauteur est effectué selon un angle inférieur à 180° les unes par rapport aux autres sur la colonne de support (3a).

5. Dispositif de post-traitement (1) selon l'une des revendications précédentes, **caractérisé en ce qu'**au moins deux stations (2) sont disposées l'une au-dessus de l'autre sur la colonne de support (3a).

6. Dispositif de post-traitement (1) selon l'une des revendications précédentes, **caractérisé en ce que** celui-ci comporte quatre stations (2), deux stations (2) étant disposées respectivement l'une au-dessus de l'autre.

7. Dispositif de post-traitement (1) selon l'une des revendications précédentes, **caractérisé en ce que** les stations (2) sont associées par paire pour respectivement une conduite en conséquence commune.

8. Presse à vulcaniser des pneus comportant au moins un dispositif de post-traitement (1) selon au moins l'une des revendications précédentes.
